**Europäisches Patentamt**

**European Patent Office**

**Office européen des brevets**

(11) Veröffentlichungsnummer: **0 343 669**
**A1**

(12) **EUROPÄISCHE PATENTANMELDUNG**

(21) Anmeldenummer: **89109463.3**

(22) Anmeldetag: **26.05.89**

(51) Int. Cl.4: **A01J 5/04**

(30) Priorität: **27.05.88 DE 3818116**

(43) Veröffentlichungstag der Anmeldung:
**29.11.89 Patentblatt 89/48**

(84) Benannte Vertragsstaaten:
**DE FR GB**

(71) Anmelder: **HAPPEL, Fritz**

**D-8951 Baisweil 24(DE)**

(72) Erfinder: **HAPPEL, Fritz**

**D-8951 Baisweil 24(DE)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heijn**
**B.Sc.(Phys.) Morgan**
**Robert-Koch-Strasse 1**
**D-8000 München 22(DE)**

(54) **Melksystem.**

(57) Es wird ein Melksystem beschrieben, das ein luftfreies Melken ermöglicht und ein Abnehmen des Sammelstücks erleichtert.

Steuerbare Belüftungsbohrungen (5) sind vorgesehen vor Rückschlagventilen (14) am Sammelstück (2).

Eine Veränderung des geschlossenen Volumens (13) zwischen Rückschlagklappe (14) und einem melkbecherseitigen Abschluss ist möglich.

**EP 0 343 669 A1**

## Melksystem

Die Erfindung befaßt sich mit Verbesserungen von Melkanlagen, und zwar insbesondere mit der Schaffung eines ein luftfreies Melken ermöglichenden Melksystems, das ohne Einsteuerung von Luft arbeitet, sowie mit einer Verbesserung eines Sammelstücks von Melkanlagen, bei denen jedem kurzen Milchschlauch im Sammelstück ein Rückschlagventil zugeordnet ist.

Sammelstücke der hier interessierenden Art sind aus der Patentanmeldung P 30 20 294.9 bekannt.

Bei Verwendung solcher Sammelstücke kann in bestimmten Fällen das Abnehmen des Melkzeugs gewisse Schwierigkeiten bereiten, weil durch die Rückschlagventile eine Belüftung der kurzen Milchschläuche bzw. der Zitzengummiinnenräume verhindert wird und der über vorhandene Undichtigkeiten erfolgende Unterdruckabbau im Zitzengummiinnenraum zu langsam vor sich gehen kann.

Deshalb wird im Rahmen der Erfindung vorgesehen, daß jedem kurzen Melkschlauch, der das Sammelstück mit dem Melkbecher verbindet, eine gesteuerte Belüftung zugeordnet wird, und zwar vorzugsweise derart, daß im Bereich der mit den kurzen Milchschläuchen zu verbindenden Anschlußstutzen im Sammelstück jeweils eine steuerbare Bohrung vorgesehen ist, die sich zwischen Atmosphäre und dem jeweils vor dem Rückschlagventil gelegenen Bereich erstreckt, so daß im offenen Zustand dieser Bohrung jeder mit dem kurzen Milchschlauch ver bundene Anschlußstutzen über diese Bohrung unmittelbar mit der Atmosphäre in Verbindung steht. Die durch die Rückschlagklappen gewährleistete Trennung der vier Zitzen bleibt dabei voll aufrechterhalten.

Die Steuerung dieser Belüftungskanäle erfolgt über ein allen Beluftüngskanälen gemeinsames Ventilglied, das vorzugsweise aus einer Platte besteht, die insbesondere mit einer vorgebbaren Vorspannkraft in einer Ausnehmung des Sammelstücks geführt ist, an deren Boden alle vier Belüftungsbohrungen enden. Sitzt das Ventilglied auf dem Boden auf, so sind die Belüftungsbohrungen geschlossen, wird es durch Fremdkraft abgehoben, so sind die Belüftungskanäle geöffnet. Das plattenförmige Ventilelement wird vorzugsweise gleichzeitig als Anschlußelement für einen automatischen Abnehmer ausgebildet, so daß immer dann, wenn der automatische Abnehmer in Tätigkeit tritt, ein Anheben dieses plattenförmigen Elements und damit ein Öffnen der Belüftungskanäle erfolgt, was gleichbedeutend damit ist, daß ein problemfreies Abnehmen der Melkzeuge gewährleistet ist.

Das plattenförmige Ventilelement ist in der entsprechenden Ausnehmung des Sammelstücks vorzugsweise in der Art angeordnet, daß es durch insbesondere eine Drehbewegung verriegelt werden kann, so daß die Belüftungskanäle in diesem Falle dauerhaft geschlossen sind. Diese Möglichkeit erbringt eine Erweiterung der Einsatzmöglichkeiten dieses Sammelstücks.

Die Unterseite des Ventilelementes kann mit einem elastischen Belag versehen sein, so daß sich ein einwandfreier Verschluß der Belüftungskanäle bereits ergibt, wenn dieses plattenförmige Element am Boden der Ausnehmung anliegt.

Gemäß einer weiteren Ausführungsform kann im Bodenbereich der Ausnehmung oder im Außenbereich des Ventilelements auch eine ringförmige Dichtung angebracht sein, so daß der Bodenbereich, in dem die Belüftungsöffnungen münden, durch die ringförmige Dichtung bei aufliegendem Dichtelement bezüglich der Atmosphäre geschlossen ist.

Die Belüftungskanäle werden vorzugsweise möglichst kurz ausgebildet, sie sind aber stets äußerst einfach zu realisieren.

Die durch die vorzugsweise als Klappenventile ausgebildeten Rückschlagventile erreichte Trennung der einzelnen Milchschlauchanschlüsse voneinander und damit die Verhinderung des Auftretens von Cross-Infektionen wird durch das Anbringen dieser Belüftungsbohrungen in keiner Weise beeinträchtigt.

Neben der bereits beschriebenen Ausführungsvariante der Verwendung eines gemeinsamen Abschluß- bzw. Ventilelementes für die vier Belüftungsbohrungen, kann an dem plattenförmigen Organ die Dichtungsanordnung auch so gewählt werden, daß jeder Belüftungsbohrung ein eigenes kleinflächiges Dichtungselement zugeordnet ist.

Ein weiterer sehr wesentlicher Aspekt der Erfindung, der sowohl mit als auch ohne die vorstehend beschriebenen Belüftungsöffnungen im Sammelstück von Bedeutung ist, besteht darin, daß Maßnahmen getroffen werden, um einer Vakuumüberhöhung aufgrund der Zitzengummiaufweitung entgegenzuwirken, bzw. diese Überhöhung zu vermeiden und gleichzeitig sicherzustellen, daß eine an sich unerwünschte Einsteuerung von Luft unterbleiben kann.

Aus der Patentanmeldung 36 24 478 ist es bereits bekannt, im Melkbecher ein Ventil vorzusehen, und zwar in Verbindung mit einem Abschlußorgan, an das sich der Zitzengummi aufgrund der Formgestaltung dieses Abschlußelements im Entlastungstakt dicht anlegen kann. Diese Anordnung ermöglicht es, eine Vakuumüberhöhung zu vermeiden und sicherzustellen, daß die entsprechende Druckkurve im ungefährlichen Bereich bleibt. Diese Anordnung ist aber aufgrund des benötigten Ventils im Melkbecher unpraktisch und insgesamt unbefriedigend.

Gemäß der vorliegenden Erfindung wird davon Abstand genommen, im Melkbecher selbst ein Abschlußventil vorzusehen, sondern es werden als Abschluß die Rückschlagventile im Sammelstück verwendet, und zwar in Verbindung mit einem im Entlastungstakt wirksamen Abschlußorgan im Melkbecherbereich, bei dem es sich um ein Formteil entsprechend dem in der Patentanmeldung 36 24 478 beschriebenen Formteil oder auch um einen sogenannten Rollschlauchabschluß im unteren Teil des Zitzengummis handeln kann.

Wesentlich ist in diesem Zusammenhang aber auch, daß der Raum zwischen der Zitze oder dem melkbecherseitigen Abschluß und dem sammelstückseitigen Abschluß (Rückschlagventil) als elastischer Raum ausgebildet wird, um auf diese Weise vom Milchfluß bedingte Änderungen kompensieren zu können.

Bevorzugt wird dieser elastische Raum dadurch realisiert, daß die Abschlußklappen der Rückschlagventile im Sammelstück membranartig ausgebildet werden und demgemäß die Membranbereiche bezüglich der normalen Schließebene des Klappenventils auswandern und damit raumverändernd wirken können.

Die Klappenventile sind zu diesem Zweck aus einem entsprechend elastischen Material gefertigt, wobei jedoch zur Sicherstellung der Stabilität und der eindeutigen Funktion als Rückschlagventil die Umfangsbereiche dieser Klappenventile verstärkt, insbesondere wulstartig verstärkt, ausgebildet sind.

Nach einer zweckmäßigen Ausgestaltung der Erfindung wird das Belüftungsventil in Offenstellung verriegelt und die Atmosphäreneintrittsöffnung verschlossen. Auf diese Weise ist es bei auf dem Kopf stehendem Melkzeug beim Spülen möglich, Flüssigkeit durch die Bohrungen zu führen und damit ein Spülen dieser Bohrungen zu gewährleisten.

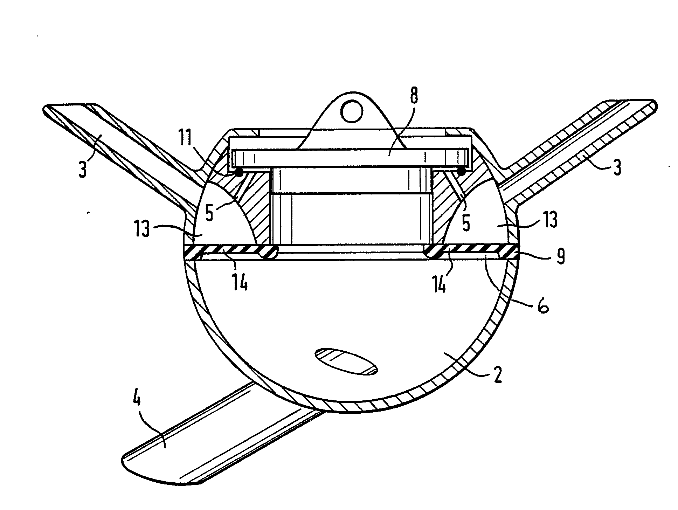

Die beigefügte Zeichnung zeigt in sehr schematischer Weise ein Sammelstück mit membranartig ausgeführten Rückschlagklappen 14, wobei vorzugsweise alle vier Rückschlagklappen zu einem Bauteil zusammengefaßt sind und gleichzeitig eine Dichtung 9 zwischen den beiden Teilen des Sammelstücks 2 bilden.

Die zwischen den Rückschlagventilen 14 und den Anschlußstutzen 3 für die kurzen Milchschläuche gelegenen Räume sind jeweils über eine Belüftungsbohrung 5 mit Atmosphäre verbindbar. Verschluß und Freigabe dieser Belüftungsbohrungen wird über ein plattenförmiges Ventilelement 8 gesteuert, das mit einem Aufhänger für einen automatischen Abnehmer versehen ist, so daß bei Ausübung eines Zugs während des Abnahmevorgangs zwangsläufig eine Belüftung aller vier Kanäle erfolgt. Das plattenförmige Element 8 ist vorzugsweise leicht gegen die Bodenfläche der Ausnehmung vorgespannt, in der alle vier Belüftungsbohrungen 5 münden. Eine gemeinsame Abdichtung kann z.B. über eine Ringdichtung 11 erfolgen.

Im plattenförmigen Element 8 kann eine verschließbare Bohrung vorgesehen sein.

Die Rückschlagventile 14, die membranartig ausgebildet sind, besitzen einen stabilen Umfangswulst, so daß bei gewährleisteter Stabilität und gewährleisteter Funktion als Rückschlagventil der Membranbereich so gewählt werden kann, wie dies für die jeweilige Raumveränderung notwendig ist.

## Ansprüche

1. Melksystem mit einem Sammelstück (2) mit Anschlußstutzen (3) zur Verbindung mit den zu den Melkbechern führenden Milchschläuchen und einer Milchabflußöffnung (4),
dadurch **gekennzeichnet,**
daß jedem Anschlußstutzen (3) ein Rückschlagventil (14) zugeordnet ist und daß im Bereich eines jeden Anschlußstutzens (3) eine steuerbare Belüftungsbohrung (5) vorgesehen ist, die vor dem Rückschlagventil (14) stutzenseitig mündet.

2. Melksystem nach Anspruch 1,
dadurch **gekennzeichnet,**
daß die Steuerung in Abhängigkeit von der Betätigung eines automatischen Abnehmers erfolgt.

3. Melksystem nach Anspruch 1 oder 2,
dadurch **gekennzeichnet,**
daß alle Belüftungsbohrungen (5) in eine gemeinsame Fläche münden, der ein plattenförmiges Ventilelement (8) zugeordnet ist.

4. Melksystem mit einem Sammelstück mit den einzelnen Anschlußstutzen zugeordneten Rückschlagventil,
dadurch **gekennzeichnet,**
daß die Rückschlagventile (14) in Form von vorzugsweise horizontal angeordneten Klappen ausgebildet sind, welche gleichzeitig elastische Membranen bilden, die eine Veränderung des geschlossenen Volumens (13) zwischen Rückschlagklappe (14) und einem melkbecherseitigen Abschluß durch entsprechende Verformung ermöglichen.

5. Melksystem nach Anspruch 4,
dadurch **gekennzeichnet,**
daß die Membranen einen Versteifungsrand aufweisen.

6. Melksystem nach einem der vorhergehenden Ansprüche,
dadurch **gekennzeichnet,**
daß melkbecherseitig ein im Entlastungstakt wirksamer Abschluß vorgesehen ist.

7. Melksystem nach einem der vorhergehenden Ansprüche,
dadurch **gekennzeichnet,**
daß der Abschluß zwischen einem Form-Spreitzkörper und dem Zitzengummi ausgebildet ist.

8. Melksystem nach Anspruch 1,
dadurch **gekennzeichnet,**
daß das Beluftungsventil (8) in Offenstellung verriegelt und die Atmosphäreneintrittsöffnung verschlossen wird.

9. Melksystem nach Anspruch 8,
dadurch **gekennzeichnet,**
daß die Atmosphäreneintrittsöffnung mit einer Tülle versehen ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2192324 (NATIONAL RESEARCH DEVELOPMENT CORPORATION) <br> * Seite 1 - 3; Figur 3 * | 1-3 | A01J5/04 |
| Y | | 6-9 | |
| D,Y | GB-A-2192525 (WESTFALIA SEPARATOR AG) <br> * das ganze Dokument * | 6, 7 | |
| Y | US-A-4671209 (WHITTLESTONE ET AL.) <br> * Spalte 2, Zeile 38 - Zeile 66 * | 8 | |
| Y | DE-A-1482308 (HAPPEL) <br> * Seite 2, Zeile 25 - Zeile 27; Figur 1 * | 9 | |
| D,X | WO-A-8103412 (HAPPEL) <br> * Seite 11, Absatz 3 - Seite 15; Figuren 13, 12 * | 4, 5 | |
| X | * Seite 9, Absatz 3 - Seite 11, Absatz 1; Figuren 6, 7 * | 6, 7 | |
| A | GB-A-2182233 (LEWIS) <br> * Seite 1, Zeile 95 - Zeile 100 * | 4 | RECHERCHIERTE SACHGEBIETE (Int. Cl.4) |
| A | US-A-2702526 (TORGERSON) | | A01J |
| A | EP-A-246759 (AMBIC EQUIPMENT LTD.) | | |

Der vorliegende Recherchenbericht wurde für alle Patentansprüche erstellt

| Recherchenort | Abschlußdatum der Recherche | Prüfer |
|---|---|---|
| DEN HAAG | 08 SEPTEMBER 1989 | VAN OORSCHOT J.W.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

                                                        

& : Mitglied der gleichen Patentfamilie, übereinstimmendes Dokument